# EUROPEAN PATENT APPLICATION

(11) **EP 3 401 871 A1**
(43) Date of publication of application: **14.11.2018**
(21) Application number: 16883791.2
(22) Date of filing: 21.12.2016
(51) Int. Cl.: G06Q 50/10, G06Q 30/02, G08B 25/04, G08B 25/10

(54) **ENTRY DETECTION SYSTEM, ENTRY DETECTION DEVICE, AND PROGRAM**

(30) Priority: 07.01.2016 JP 2016001936
(71) Applicant: Recruit Co., Ltd., Chuo-ku Tokyo 1040061 (JP)
(72) Inventor: KUMAZAWA, Yasushi, Tokyo 100-6640 (JP)
(74) Representative: EIP
(86) International application number: PCT/JP2016/088059
(87) International publication number: WO 2017/119292

(57) **Abstract**

An entry detection system (10) that detects a visitor to a store includes: a signal transmitting unit (100) that transmits a signal including identification information of the store to a mobile device (400) owned by the visitor; and a visitor information acquiring unit (220) that acquires visitor identification information identifying the visitor from the mobile device (400) that has received the signal.

## Description

### Cross-Reference to Related Applications

This application is based upon Japanese Patent Application No. 2016-1936, filed on January 7, 2016; the entire contents of which are incorporated herein by reference.

### Technical Field

The present invention relates to an entry detection system, an entry detection device, and a program that detect a visitor to a store.

### Background Art

Conventionally, there is known a technology of using a beacon that can be received by a mobile device, such as a smartphone, to detect its user's visit to a store and deliver a coupon or analyze the purpose of his/her visit. For example, Patent Document 1 describes a system that transmits beacon information that can be received by a mobile device carried by a player in a game hall and detects the player who has entered the game hall on the basis of information sent from the mobile device that has received the beacon information.

### Citation List

### Patent Document

Patent Document 1: Japanese Unexamined Patent Application Publication No. 2015-146855

### Summary

However, the above-described system could not associate a visitor with some sort of membership number or the like and provide a service based on member information when having detected the visitor.

The present invention has been made in view of the situation described above, and one object of the invention is to identify a visitor to a store by associating the visitor with some sort of membership number or the like and provide an individually tailored service when the visitor has been detected.

An entry detection system according to an aspect of the present invention is an entry detection system that detects a visitor to a store, and includes a signal transmitting unit that transmits a signal including identification information of the store to a mobile device owned by the visitor; and a visitor information acquiring unit that acquires visitor identification information identifying the visitor from the mobile device that has received the signal.

Furthermore, the entry detection system may further include a membership registration determining unit that determines the presence or absence of the visitor's membership registered in the store on the basis of the visitor identification information; and a membership registration promoting unit that informs the mobile device of information promoting registration for membership in a case where the visitor has not registered for membership in the store.

Moreover, the entry detection system may further include a membership registration information providing unit that provides the mobile device with attribute information required for the registration for membership of the visitor corresponding to the visitor identification information.

### Advantageous Effects of Invention

According to the present invention, it is possible to identify a visitor to a store by associating the visitor with some sort of membership number or the like and provide an individually tailored service when the visitor has been detected.

### Brief Description of Drawings

Fig. 1 is a diagram showing a schematic configuration of an entry detection system according to an embodiment of the present invention.
Fig. 2 is a sequence diagram of an entry detection process according to the embodiment of the present invention.
Fig. 3 is a flowchart of a membership registration promoting process according to the embodiment of the present invention.
Fig. 4 is a diagram illustrating a membership registration inducing screen according to the embodiment of the present invention.
Fig. 5 is a diagram illustrating a store confirmation screen according to the embodiment of the present invention.
Fig. 6 is a diagram illustrating a membership registration screen according to the embodiment of the present invention.
Fig. 7 is a diagram illustrating a membership registration completion screen according to the embodiment of the present invention.

### Description of Embodiments

An embodiment of the present invention is described in detail below with reference to drawings. Incidentally, the same components are assigned the same reference numeral, and overlapping description is omitted.

### Embodiment

### (1) Configuration of Embodiment

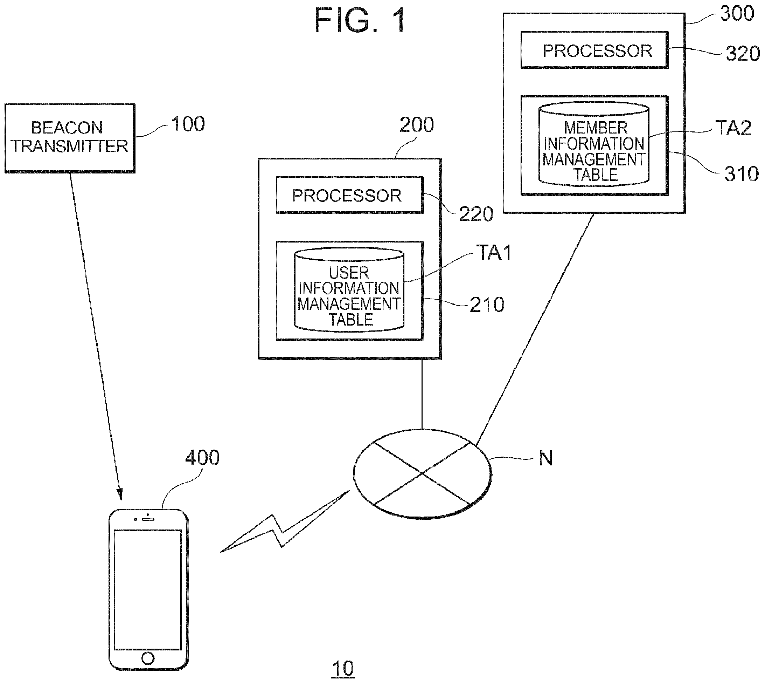

Fig. 1 is a diagram showing a schematic configuration of an entry detection system 10 according to the present embodiment. As shown in Fig. 1, the entry detection system 10 includes a beacon transmitter (a signal transmitting unit) 100, a management server 200, a store server 300, and a mobile device 400. The management server 200, the store server 300, and the mobile device 400 are connected through a communication network N.

In the present embodiment, there is described an example of detection of a visitor A and promotion of registration for membership in a store B that is one of multiple stores and brands providing a point service when the visitor A, who is a member of the point service, has entered the store B; however, the present embodiment is not intended for this only, and can be applied to detect a visitor to a facility, such as an amusement facility, a shopping mall, or a department store, by means of a beacon and induce the visitor to register for membership in the facility.

The beacon transmitter 100 transmits a certain radio wave (beacon) to its surroundings on the basis of a communication standard, such as Bluetooth@ Low Energy (BLE). The beacon transmitter 100 is placed in a store, and a mobile device located within a range from tens of centimeters to tens of meters from the beacon transmitter 100 can receive the beacon. That is, during the time from when a person carrying the mobile device 400 has entered the store until he/she steps outside the store, the mobile device 400 can receive the beacon. The beacon includes identification information identifying the store (store ID).

The management server 200 has a function of realizing a point service by executing a dedicated application (computer program) in cooperation with the mobile device 400. In the point service, when a member carrying the mobile device 400 with the dedicated application installed has entered a store that provides the service point, his/her entry is detected, and an entry point is given. Accumulated points can be used as an electronic voucher to purchase a product in any store that provides the service point. Furthermore, in a case where a visitor to the store has not registered for membership in the store, the management server 200 induces the visitor to register for membership in the store.

The management server 200 is composed of, for example, a computer having high throughput, and realizes a server function by a program for a certain server running on the computer. Here, the number of computers composing the management server 200 does not necessarily have to be one; the management server 200 may be composed of a plurality of computers distributed on the communication network N. The management server 200 includes a database 210 and a processor (a visitor information acquiring unit, a membership registration determining unit, a membership registration promoting unit, and a membership registration information providing unit) 220. The database 210 includes a user information management table TA1.

The user information management table TA1 is a table that manages information on users (members) of the point service. In the user information management table TA1, attribute information of each user, such as name, address, phone number, e-mail address, and date of birth, as well as information of current points held are registered in a manner associated with point service user ID (visitor identification information). Furthermore, information such as a MAC address of the user's mobile device 400 may also be registered.

Moreover, information of the presence or absence of membership registered in each available store is further registered in the user information management table TA1. Furthermore, in a case where registration for membership has already been made, a membership number in the store may be registered. Incidentally, the membership number can be acquired from the store server 300.

The processor 220 is composed of an arithmetic-logic unit (such as a CPU), which performs an arithmetic operation, a logical operation, a bit operation, etc., and various registers, and executes various programs stored in a storage means such as a ROM, thereby centrally controlling each unit of the management server 200. Furthermore, the processor 220 detects and identifies a visitor, and also executes a dedicated application (computer program) for providing the point service in cooperation with the mobile device 400.

The store server 300 has a function of performing membership management, etc. with respect to each store. The store server 300 is composed of, for example, a computer having high throughput, and realizes a server function by a program for a certain server running on the computer. The number of computers composing the store server 300 does not necessarily have to be one; the store server 300 may be composed of a plurality of computers distributed on the communication network N. The store server 300 includes a database 310 and a processor 320. The database 310 includes a member information management table TA2.

The member information management table TA2 is a table that manages information on members of each store. In the member information management table TA2, attribute information of each member, such as name, address, phone number, e-mail address, and date of birth, as well as information of a visit history and a purchase history are registered in a manner associated with member ID. Furthermore, the customer's point service user ID and current points held may also be registered.

The processor 320 is composed of an arithmetic-logic unit (such as a CPU), which performs an arithmetic operation, a logical operation, a bit operation, etc., and various registers, and executes various programs stored in a storage means such as a ROM, thereby centrally controlling each unit of the store server 300.

The mobile device 400 is a mobile device owned by a visitor A and is capable of giving and receiving data to and from the management server 200 through the communication network N; examples of the mobile device 400 include any handheld devices, such as a smartphone, a cell-phone, and a personal digital assistant (PDA). The mobile device 400 includes a processor, input devices such as various operation buttons and a touch panel, a display device such as a liquid crystal display, a communication interface for connecting the mobile device 400 to the communication network N, and a storage resource such as a disk drive or a semiconductor memory (such as a ROM or a RAM). An operating system program, a communication interface driver program, various data, etc. are stored in the storage resource. Furthermore, the storage resource stores therein a dedicated application (computer program) that the processor executes, thereby detecting and identifying a visitor and using the point service in cooperation with the management server 200.

The communication network N includes a communication network that enables the management server 200, the store server 300, and the mobile device 400 to send and receive information among them. The communication network N may be, for example, any of the Internet, a LAN, a leased line, a telephone line, an intranet, a mobile communication network, Bluetooth, Wireless Fidelity (Wi-Fi), other communication lines, and a combination of these, irrespective of whether wired or wireless.

### (2) Operation of Embodiment

Below is described a case where a visitor A who is a user of the point service has entered a store B that the visitor A has not registered for membership therein.

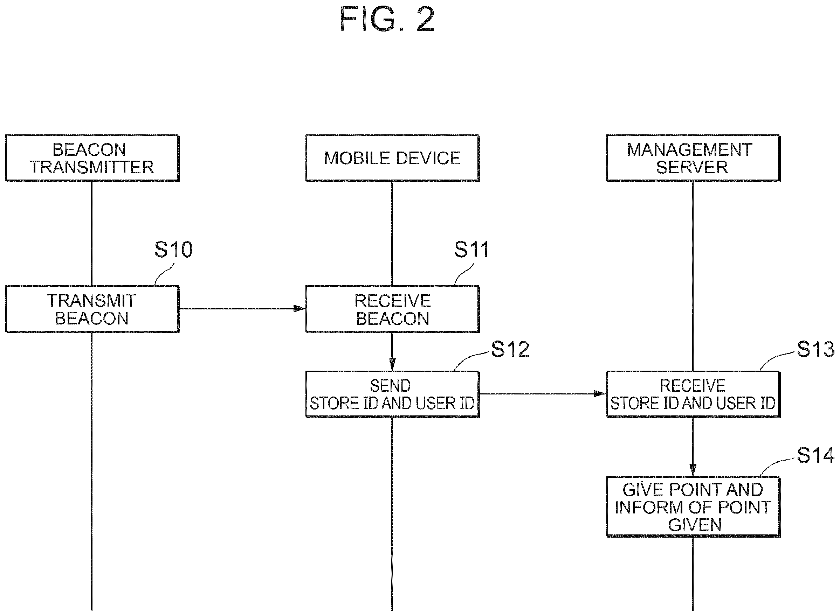

Fig. 2 is a sequence diagram of an entry detection process.

First, when the visitor A has entered the store B, the mobile device 400 owned by the visitor A receives a beacon (Step S11) transmitted from the beacon transmitter 100 (Step S10).

When having received the beacon, the mobile device 400 sends identification information of the visitor A together with identification information (store ID) of the store B included in the beacon to the management server 200 through the communication network N (Step S12). The identification information of the visitor A here is user ID of the point service. Incidentally, the identification information of the visitor A may be device-specific information such as a MAC address of the mobile device 400, or may be information that can identify the visitor A, such as an e-mail address of the visitor A.

The management server 200 receives the user ID of the visitor A from the mobile device 400 (Step S13). Incidentally, in a case where the management server 200 receives information (such as a MAC address or an e-mail address) other than the user ID from the mobile device 400, the management server 200 may acquire corresponding user ID by reference to the user information management table TA1.

Incidentally, when the management server 200 has received the store ID of the store B and the identification information of the visitor A from the mobile device 400, an entry point is given to the visitor A by the function of the point service, and information of the current points stored in the user information management table TA1 is updated. Furthermore, the management server 200 informs the mobile device 400 of the fact that the entry point has been given (Step S14).

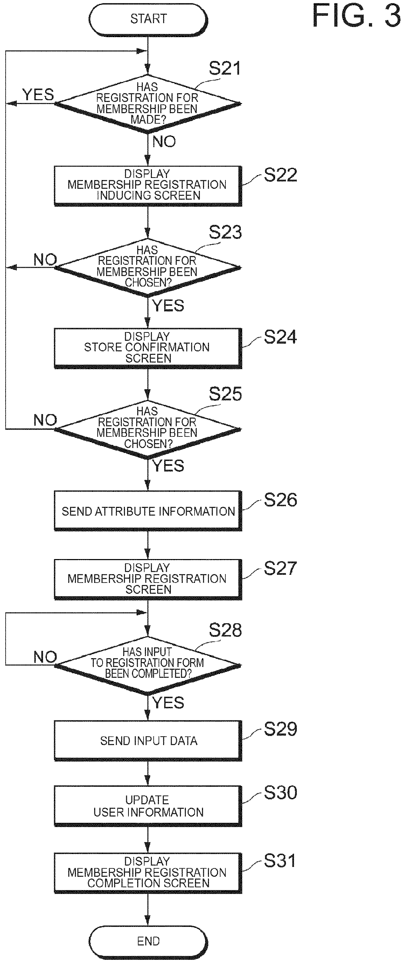

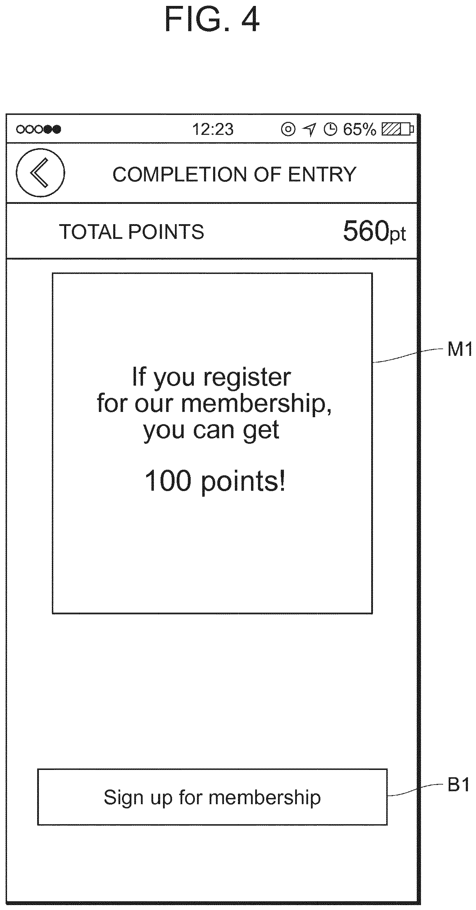

Fig. 3 is a flowchart of a membership registration promoting process. First, the management server 200 determines whether or not the visitor A has registered for membership in the store B by reference to the user information management table TA1 on the basis of the store ID and user ID acquired from the mobile device 400 (Step S21). If registration for membership in the store B has not been made (NO), the management server 200 causes a screen like an example shown in Fig. 4 for inducing the visitor A to register for membership in the store B to be displayed on the display device of the mobile device 400 (Step S22). As shown in Fig. 4, in the screen of the mobile device 400, a message (M1) informing that there is a privilege of points to be given if registration for membership is made, an operation button (B1) to choose whether or not to register for membership, etc. are displayed. Incidentally, in a case where the visitor A has already registered for membership in the store B, for example, information on services for members, information on recommended products, etc. may be displayed on the display device of the mobile device 400.

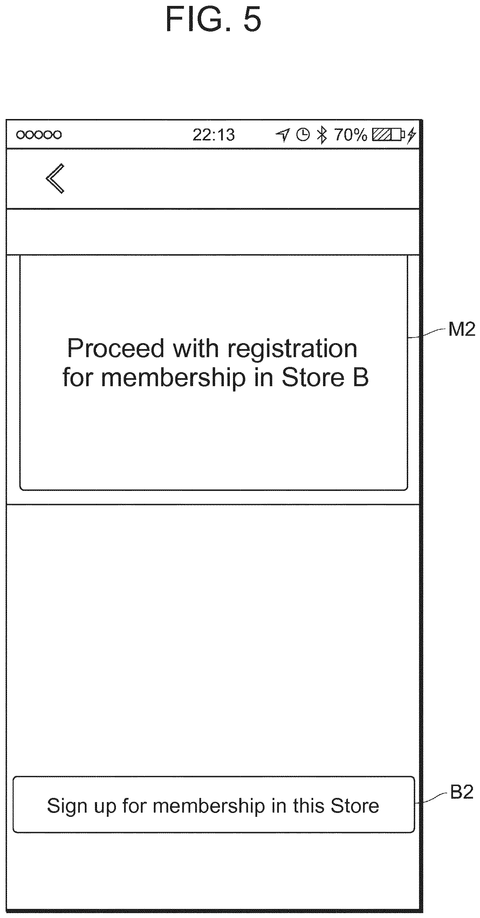

If the visitor A chooses to register for membership through a touch panel operation or the like on the mobile device 400 (Step S23), a store confirmation screen like an example shown in Fig. 5 to confirm the store is displayed on the screen of the mobile device 400 (Step S24). As shown in Fig. 5, in the store confirmation screen of the mobile device 400, a message (M2) indicating it is registration for membership in the "store B", an operation button (B2) to again check if it is registration for membership in this store, etc. are displayed.

If the visitor A chooses to register for membership in the store B through a touch panel operation or the like on the mobile device 400 (Step S25), the management server 200 acquires attribute information (name, address, phone number, e-mail address, and date of birth, etc.) of the visitor A concerning the point service from the user information management table TA1, and sends, of the attribute information, pieces of information required for registration for membership in the store B to the mobile device 400 (Step S26).

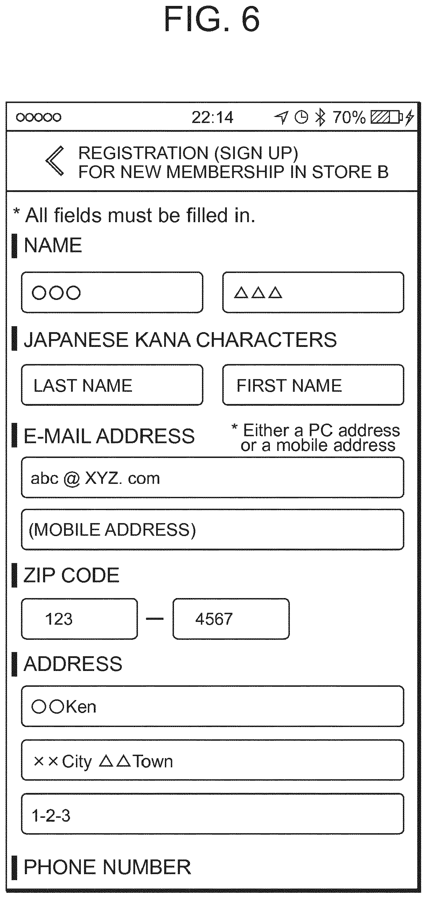

When having received the attribute information, the mobile device 400 displays thereon a membership registration screen like that shown in Fig. 6 (Step S27). As shown in Fig. 6, a form including input fields required for registration for membership is displayed in the membership registration screen. Data of an input form is determined with respect to each store, thus the management server 200 may acquire an input form from the store server 300 and send it to the mobile device 400. Here, of input fields, those included in the attribute information acquired from the management server 200 are automatically input and displayed on the screen. Incidentally, if there are store-specific input fields that are not included in the attribute information, these input fields are displayed in blank. Incidentally, all the input fields can be displayed on the membership registration screen by scrolling the screen of the mobile device 400.

The visitor A operates the mobile device 400 to input or correct necessary fields in the input form, and when completion of the input to the membership registration form has been detected through a touch panel operation or the like on the mobile device 400 (Step S28), input data is sent to the management server 200 (Step S29). Furthermore, the management server 200 updates the user information management table TA1, and updates the presence or absence of membership of the visitor A registered in the store B with "presence", and sends the input data to the store server 300 of the store B (Step S30).

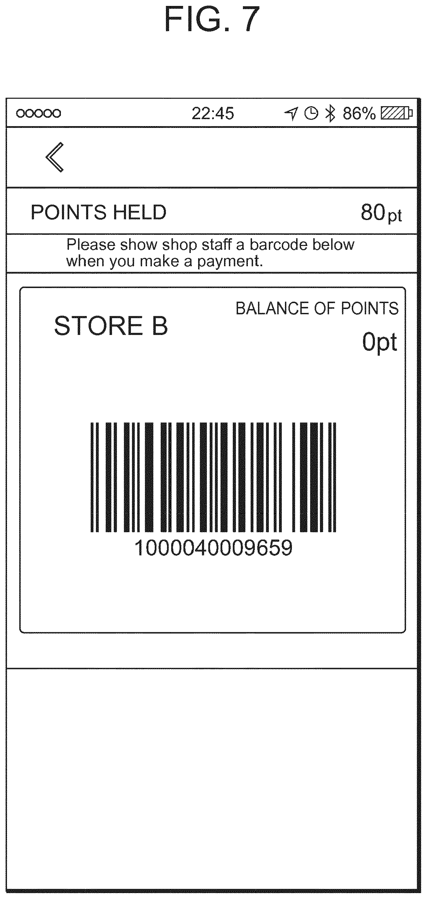

Moreover, the management server 200 informs the mobile device 400 of the fact that registration for membership in the store B has been completed, and causes a membership registration completion screen like that shown in Fig. 7 to be displayed on the display device of the mobile device 400 (Step S31). As shown in Fig. 7, for example, a newly assigned membership number or the like of the visitor A in the store B is displayed. The management server 200 can acquire the membership number from the store server 300 and cause the membership number to be displayed on the mobile device 400.

As described above, according to the present embodiment, information sent from the mobile device 400 that has received a beacon is associated with user ID registered in the user information management table TA1 in the management server 200, thereby it is possible to identify the visitor A and provide a service tailored to the individual.

Furthermore, if the identified visitor A has not registered for membership in the intended store B, the mobile device 400 of the visitor A is informed of a message promoting registration for membership; therefore, it is possible to efficiently promote registration for membership of a visitor who has not yet registered for membership in the store. Moreover, in a case where the visitor registers for membership, data of fields required for registration for membership is acquired from the user information management table TA1, and a membership registration form filled with the data is displayed on the mobile device 400; therefore, it is possible to spare the visitor the trouble of having to input information to the registration form.

Furthermore, a registration form is determined with respect to each store, thus the management server 200 acquires a registration form from the store server 300. Accordingly, the registration form of each store may be managed by the store server 300 of each store, and the management server 200 can handle registration for membership in multiple stores only by acquiring data of registration forms from the respective store servers 300 of the stores when registration for membership is made. Moreover, as for, of the fields required for registration for membership, those included in attribute information acquired from the user information management table TA1, corresponding attribute information is automatically displayed in a predetermined position of the registration form. Accordingly, it is possible to simplify a visitor's operation performed to register for membership, and also possible to prevent erroneous data due to the visitor's input error from being registered and improve the reliability in a membership registration process.

### Reference Signs List

- 10: Entry detection system
- 100: Beacon transmitter
- 200: Management server
- 210: Database
- 220: Processor
- 300: Store server
- 310: Database
- 320: Processor
- 400: Mobile device
- TA1: User information management table
- TA2: Member information management table
- N: Communication network

## Claims

1. An entry detection system that detects a visitor to a store, the entry detection system comprising:
a signal transmitting unit that transmits a signal including identification information of the store to a mobile device owned by the visitor; and
a visitor information acquiring unit that acquires visitor identification information identifying the visitor from the mobile device that has received the signal.

2. The entry detection system according to claim 1, further comprising:
a membership registration determining unit that determines presence or absence of the visitor's membership registered in the store on a basis of the visitor identification information; and
a membership registration promoting unit that informs the mobile device of information promoting registration for membership in a case where the visitor has not registered for membership in the store.

3. The entry detection system according to claim 2, further comprising a membership registration information providing unit that provides the mobile device with attribute information required for the registration for membership of the visitor corresponding to the visitor identification information.

4. An entry detection system that detects a visitor to a store, the entry detection system comprising:
a signal transmitting unit that transmits a signal including identification information of the store to a mobile device owned by the visitor;
a store server that performs membership management with respect to each store; and
a management server capable of sending and receiving information to and from the store server,
the management server including
a visitor information acquiring unit that acquires visitor identification information identifying the visitor from the mobile device that has received the signal;
a membership registration determining unit that determines presence or absence of the visitor's membership registered in the store on a basis of the visitor identification information;
a membership registration promoting unit that informs the mobile device of information promoting registration for membership in a case where the visitor has not registered for membership in the store; and
a membership registration information providing unit that provides the mobile device with data of an input form displayed on a display device of the mobile device to cause the visitor to input fields required for the registration for membership and attribute information required for the registration for membership of the visitor corresponding to the visitor identification information,
wherein the input form is determined with respect to each store, thus the membership registration information providing unit acquires the data of the input form from the store server of the store.

5. The entry detection system according to claim 4, wherein as for, of the fields required for the registration for membership, those included in the attribute information provided by the membership registration information providing unit, corresponding attribute information is automatically displayed in a predetermined position of the input form.

6. An entry detection device that detects a visitor carrying a mobile device to a store, the entry detection device comprising a visitor information acquiring unit that acquires visitor identification information identifying the visitor from the mobile device that has received a signal including identification information of the store.

7. A program causing a computer that detects a visitor carrying a mobile device to a store to serve as:
a visitor information acquiring unit that acquires visitor identification information identifying the visitor from the mobile device that has received a signal including identification information of the store.
